# EUROPEAN PATENT SPECIFICATION

(11) **EP 3 028 471 B1**
(45) Date of publication and mention of the grant of the patent: **19.07.2017**
(21) Application number: 14756136.9
(22) Date of filing: 30.07.2014
(51) Int. Cl.: G06F 17/30, H04L 29/06, H04L 29/08, H04N 21/433, H04N 21/44, H04N 21/472, H04N 21/845

(54) **MULTIMEDIA CACHE WITH DYNAMIC SEGMENTING**
MULTIMEDIA-CACHESPEICHER MIT DYNAMISCHER SEGMENTIERUNG
CACHE MULTIMÉDIA À SEGMENTATION DYNAMIQUE

(30) Priority: 30.07.2013 US 201361860177 P
(43) Date of publication of application: 08.06.2016
(73) Proprietor: Opera Software AS, 0401 Oslo (NO)
(72) Inventor: VENTURI, Luca, N-0352 Oslo (NO)
(74) Representative: Zacco Norway AS
(86) International application number: PCT/NO2014/050134
(87) International publication number: WO 2015/016719

(56) References cited:
- US-A1- 2005 066 063
- US-A1- 2011 019 747
- US-A1- 2013 074 134

## Description

### Technical Field

The present invention relates to the storage of streamed media data in an optimal manner.

### Background

Streamed media services are widely used for viewing audio and video content over the Internet or other networks using desktop computers, laptops but also on devices with lower memory and processing capabilities, such as televisions and also those with limited battery life, such as handheld PDAs, tablets and mobile phones or smartphones. When receiving a streamed media item, the receiving device, or media client, conventionally buffers the received streamed data in a multimedia cache to minimise interruptions or delay in playback. Depending on the size of the streamed media item, the cache may buffer all or only part of the media data. The media data is typically stored in segments in a file of the multimedia cache.

The internet browser Opera version 10.5 includes a multi-segment media cache in which multimedia streamed data is stored while the user watches it. Each segment stored in the cache contains a continuous section for the multimedia content and is identified by metadata that is likewise stored. As new data is received, it can be appended to the previously stored segment provided that the new data is temporally contiguous to that last stored. The segment metadata is then updated with each addition to a segment. When viewing streamed data, such as a short video or news report, users may wish to skip over parts of streamed data in order to view one or more specific portions. Rather than caching or pre-allocating the whole media file, which can be impractical and slow, the media client typically requests only the selected media portion or portions, resulting in a discontinuity in the received media stream. In the Opera 10.5 browser, the previously stored segment is not discarded, instead each new received section of discontinuous media data is buffered in a separate segment in the multimedia cache file. Each segment is identified by associated metadata, which is likewise stored and which identifies which content is stored in which storage position to enable playback. A further multi-segment cache in which temporally non-contiguous portions of a received media stream are stored in separate segments is described in US 2005/0066063.

While this manner of operating a multimedia cache enables the seamless playback of multimedia streamed data, there is a risk that the number of segments generated can become very large, which multiplies the storage operations required both to retrieve the content and the metadata associated with each segment. This can degrade the overall performance and increase the power consumption of the device. This situation may occur as a result of a user repeatedly skipping backwards and forwards in the streamed data and thereby generating multiple segments of out-of-order data. However, a more serious and possibly more common problem can occur when a user downloads two or more copies of a media file concurrently, for example by intentionally or unintentionally loading the same content in two or more tabs in a browser. The concurrent download of the same file will mean that two consecutively received portions of media data, although possibly containing concurrent or overlapping content, will be treated as out-of-order portions of the media file and stored as separate segments in the media cache. This problem can rapidly create hundreds or even thousands of segments and, if the user wishes to watch the content in order, will require multiple seek operations to jump from one segment to another in order to recreate the contiguous media stream.

There is thus a need to optimise the storage of media segments in order to improve the improve the overall performance of a multimedia client, reduce delays in playback and also to reduce power consumption in order conserve battery life of portable devices.

The various methods and systems described below address these and other problems.

### Summary

The present invention relates to the receiving, pre-storing and subsequent rearranging of portions of a media data item prior to storing this data in the form of segments in a cache. The pre-storage enables the media data portions to be sorted according to a temporally sequential sequence of media data stored therein so that media data portions that are contiguous in the media data item can be merged into a single segment.

According to a first aspect, there is proposed a method of storing streamed multimedia data in a multimedia cache, the method comprising receiving portions of a multimedia data stream item from a multimedia source; pre-storing a plurality of the multimedia data stream portions in a buffer in the order in which said portions are received; determining the temporal position of the pre-stored multimedia data portions in the multimedia data stream in order to identify consecutive sequences in the media data stream; rearranging said pre-stored multimedia data stream portions to form at least one temporally contiguous data stream portion and storing each contiguous data stream portion as a single segment in a cache file. The pre-storage and subsequent rearrangement or reorganisation of the received media data stream portions means that all data stream portions that are received out of order but are sequential within the media data item can be placed in the correct temporal sequence and also combined into a single data portion, thus facilitating both the subsequent storage of the media data in a cache and the retrieval of this data.

Preferably for each segment there is further stored data identifying the starting position of media data contained in said segment within the multimedia data stream item. This metadata, i.e. data which relates to the content of the media data segment, allows the correct segment to be retrieved for playback. This data may further identify the length of media data contained in said segment.

In a further aspect it is proposed to ascertain when at least one pre-stored multimedia data stream portion is temporally consecutive to multimedia data contained in a last stored segment in said cache file, and update said last stored segment by appending to it said at least one pre-stored temporally consecutive multimedia data stream portion. Thus it is possible to append data to an already stored segment in a cache file, provided this data is temporally contiguous to that in the stored segment i.e. follows that data segment in time. Updating a stored segment requires the modification of the metadata, however this is preferably limited to updating stored data identifying the length of media data contained in the segment.

It is further advantageous to detect a concurrent download of multiple instances of said multimedia data stream as a concurrent download, whether intentional or not, can severely impact on the number of segments created in a cache file. After detection of a concurrent download, it is proposed to identify temporally contiguous multimedia data stream portions containing an original of the multimedia data stream and contiguous multimedia data stream portions containing copies of the multimedia data stream, then to store each temporally contiguous multimedia data stream portion containing an original of said multimedia data stream as a segment in the cache file and storing each temporally contiguous multimedia data stream portion containing a copy of the multimedia data stream as a segment in a separate cache file. This improves the retrieval of cached multimedia data during playback as it can be limited to a single cache file. Moreover, it facilitates the appending of buffered data to already cached segments in the corresponding cache files, so providing a more efficient storage.

Preferably, the step of detecting a concurrent download of multiple instances of the multimedia data stream includes ascertaining that the number of pre-stored multimedia data stream portions in the buffer prior to rearranging exceeds a predetermined number.

Preferably, the step of determining the temporal position of said pre-stored multimedia data portions in the multimedia data stream item is performed after elapse of a predetermined time after receipt of a multimedia data stream item. In other words, if no further multimedia data item portion is received within this predetermined time, the rearrangement of the pre-stored or buffered data portions can proceed. This reduces the risk of losing data in the event of a system crash. Alternatively, the rearrangement process starting with determining the temporal position of said pre-stored multimedia data portions in the multimedia data stream item is performed when the buffer is full.

The present invention further proposes a computer readable medium having computer instructions stored thereon as well as a system for optimising storage of a multimedia data stream as set out in the following description and appended claims.

With the above description in mind, the object of the present disclosure is to overcome at least some of the disadvantages of known technology as previously described.

### Brief description of the drawings

Further objects and advantages of the present invention will become apparent from the following description of the preferred embodiments that are given by way of example with reference to the accompanying drawings. In the figures:
- Fig. 1: schematically illustrates a media cache management system in accordance with the present invention,
- Fig. 2: schematically illustrates an exemplary functional organisation of a media cache in accordance with the present invention,
- Fig. 3: is a flow diagram illustrating the handling of streamed media data by the media cache management system in accordance with the present invention, and
- Fig. 4: schematically illustrates an exemplary data structure of media data stream segments stored in the media cache system, and
- Fig. 5: schematically illustrates the structure of the rearrangement of segments in the media cache system according to an exemplary embodiment of the invention.

### Detailed description

In the following description reference will be made to streamed media data in the form of a media data file, media data item or media data content. These terms are used interchangeably and are all intended to refer to a single file, such as a single video or audio recording that is supplied as streamed data in packets over a network. When receiving streamed multimedia content, such as videos or audio files, from an external source via a communications network, user devices typically store or cache a limited number of received portions or segments of a maximum size as they are received in order and subsequently retrieve the stored segments for playback. The capacity of the cache typically corresponds to a short length of video, for example 5 minutes playback time. Caching the streamed data ensures that playback is possible with less disruption or interruption that may otherwise occur if the received media content were played back directly.

The multimedia content is sent to the user device on request by the user, for example by the user selecting a video on a web page via a web browser. Data streaming is increasingly used to provide information on the Internet or in internal company networks and users may not be interested in watching or listening to a complete media file, but instead prefer to skip content and view selected parts of the file only. Often multiple parts may be selected from different points in a media file, which means that the corresponding segments may be received and then stored out of order, i.e. contain media data that is discontinuous or not temporally contiguous. The media data sent in response to a selection that generates such a discontinuity will be stored in a separate segment from previously received data.

Early systems discarded cached portions or segments of media data as they were played back, however, more recent systems favour storing more of the data segments to enable some requested content to be retrieved from storage. For this reason, metadata relating to the content of the file must be stored also to enable correct retrieval of the media content for playback. For example, when a user opts to watch 2 minutes from the beginning of a video, skips to a section 5 minutes later and watches a further two minutes, then returns to the beginning to watch the whole video file, the already viewed four minutes of media data can be retrieved from a cache file and only the missing sections need be requested from the media source. This can result in improved playback for the user with noticeably lower delays, but will result in an increase in the number of storage operations to seek or retrieve the stored media data and to load the metadata during playback. In most cases, the number of storage operations will be within reasonable limits and will not impact significantly on the performance on the device. However, a problem can occur when a user requests a streamed media file more than once, for example by intentionally or inadvertently opening multiple copies of a tab containing the same video in a web browser. The requested media data will be sent simultaneously resulting in an interleaving of data stemming from different copies of the same file.

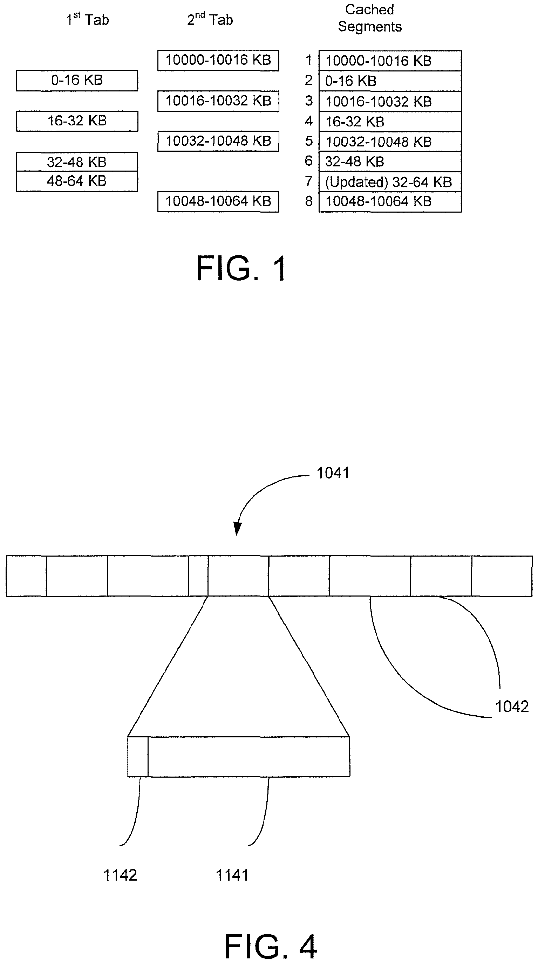

This is illustrated in simplified form in Fig. 1, which shows the concurrent receipt of two items of 64 KB of identical media data requested via the opening of two tabs in a web browser. For the purposes of illustration it is assumed that 16 KB of information is retrieved from the network at any one time. In practice, this value typically changes continuously. In the left-hand column of Fig. 1 is shown the data received in response to the opening of a 1^{st} tab; the middle column shows data received in response to opening a 2^{nd} tab, while the right-hand column shows the corresponding segments stored in a cache file. Normally, the streaming of two such media files would be expected to generate two segments containing 64 KB of media data. However, as is illustrated in Fig. 1, as the download of the two files essentially interleave, the media cache does not recognise a temporally contiguous stream of data. Instead, a segment is created for each discontinuous portion of media data received. The segments are stored in the numerical order shown with segment 1 being stored first followed by segment 2 and so on, up to segment 8. As is apparent from the stored segments, it is not possible to append the data contained in segments 2 to 6 to the previously stored segments, i.e. to segments 1 to 5, respectively, as these previous segments contain data that stems from a different copy of the file and thus is not temporally contiguous. The appending of a received segment of data to a previously stored segment is possible only in the case of 7^{th} received portion of data (i.e. the 48-64 KB of media data requested via the 1^{st} tab, which means that segment 7 is essentially an update of segment 6 with the additional 16 KB of data from the first media file added to the previously stored 16 KB of data. It will be appreciated that the concurrent download of two or more copies of the same media file can rapidly result in the creation of hundreds or even thousands of segments. If a user then opts to watch the media content from start to finish, the number of seek operations required to jump from one stored segment to the next stored segment containing the consecutive portion of media data could be sufficient to impact on the overall performance of a device and also on the power consumption. This can have undesirable consequences for battery powered devices, such as tablets, mobile phones or smartphones, and for those devices equipped with limited processing power, such as internet-ready televisions, for example.

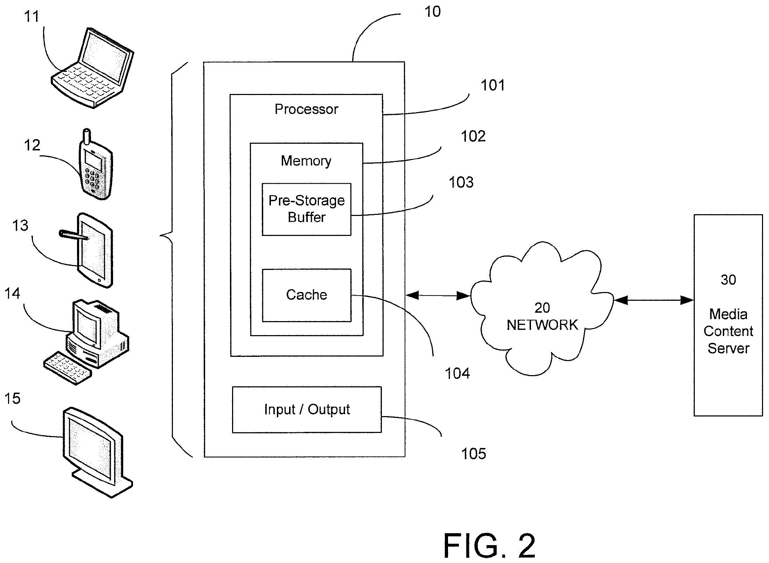

The media cache system and method of managing a multimedia cache in accordance with the present invention addresses this problem and improves the storage efficiency of stored media content, thereby improving performance and reducing power consumption. Fig. 2 depicts an example configuration of a media cache system 10 in accordance with a preferred embodiment. The exemplary media cache system 10 includes a processor 101 and memory 102 which are mutually connected for communication. Within this memory 102 there is provided a pre-storage buffer 103 and a cache 104, which is used for storing segments of streamed multimedia data. The memory may include both non-volatile and volatile memory. The memory includes computer readable code in the form of programming modules that when executed by processor 101 result in the various functions described below in cooperation with the pre-storage buffer 103, the cache storage 104 and the input/output device 105. The manner in which such computer readable code is created, structured and operated is within the normal competence of one of ordinary skill in the art and thus will not be described further here.

The cache 104 is preferably implemented in non-volatile memory to enable resistance to a system crash, for example. The pre-storage buffer 103 may be implemented in either volatile or non-volatile memory. While both the cache storage 104 and pre-storage buffer 103 are illustrated as distinct areas in memory 102 it will be appreciated by one of ordinary skill in the art that distinct areas of memory need not be pre-allocated or dedicated to these functions, but can instead be distributed throughout memory, possibly in a dynamic fashion. Moreover, it is further conceivable that a cache storage area 104 and pre-buffer storage area 103 be created by processing means upon launching a specific application that utilises or incorporates the media cache system 10, such as a web browser.

An input/output device / network interface 105 that is likewise connected for communication with processor 101 is provided for connecting to communication network 20 and specifically for sending requests to and receiving streamed media content from media content server 30 which is likewise connected to the network 20. The communication network 20 may be any public or private network or combination of these including a broadcast network, IP-based network, such as the Internet, and/or wireless network capable of enabling the exchange and distribution of multimedia content data. It is conceivable that the processor 101, memory 102 and input/output device 105 are shared with other applications in the user device or server.

The media cache system 10 may be incorporated in a user device, such as, for example, one of the devices depicted to the left of Fig. 1. Possible user devices thus include, but are not limited to a laptop computer 11, a smartphone 12, a tablet 13, a pc 14 or an internet-ready television 15. The term "incorporated" is here intended to mean that the device comprises the necessary hardware for implementing the media cache system, namely a processor, memory and input/output device enabling a connection to an external streamed media source and also that the device can be programmed with the appropriate computer readable code to perform the functions described herein. The term "internet-ready television" is here intended to refer to a television having the necessary processing and storage capabilities to enable it to connect to a network, for example the Internet, and to access streamed media data via this network. The person skilled in the relevant art will recognise that the media cache management system is not solely applicable to user devices, i.e. devices used to playback streamed media content, but could be incorporated in any device that receives streamed media data, whether for playback or distribution, for example a media distribution server.

In order to prevent the storage of excessive numbers of out of order segments from one and the same media file, the media cache system 10 enables the rearrangement of streamed media data from multiple segments into single segments containing consecutive media data prior to storage. Segments containing temporally contiguous data, i.e. data that is in the correct sequential order in the media file, can thus be combined into a single segment. If two segments contain overlapping media data or identical data, the duplicate media data is discarded.

Thus, in operation, a media cache system 10 in accordance with the present invention receives portions or segments of a multimedia data stream, such as video or audio content, from a multimedia source, which in the illustrated example is the media content server 30. The media cache system 10 then pre-stores a plurality of the multimedia data stream segments or portions in a buffer, such as the pre-storage buffer 103 shown in Fig. 2. The data stream segments are pre-stored in the order in which they are received. The media cache system then determines the temporal position of the pre-stored multimedia data portions in the multimedia data stream, in order to identify consecutive sequences in the media data stream. The pre-stored multimedia data stream portions are then rearranged to form at least one temporally contiguous data stream portion and each contiguous data stream portion is subsequently stored as a single segment in a cache file. Preferably, the rearranged segments are also transferred from the buffer for storage in the cache 104 in an order which represents the correct temporal sequence of the media data in each segment.

According to a further embodiment, the media cache system 10 is also able to detect duplicate or multiple downloading of the same media file and then save each separate copy of the media file to a separate cache file. In this way, subsequently received data that follows sequentially from previously received and stored data can be appended to an already stored segment in the corresponding cache file. The detection of multiple downloading of the same file may be achieved by determining the number of interruptions in any one data stream, which in turn generates a number of separate segments. For instance, in the example shown in Fig. 1, the data stream from the second tab is interrupted four times although the media cache system 10 would normally expect to receive contiguous portions of the streamed data in response to the request. By placing a threshold at three interruptions, then at segment 5, already, it could be deduced that a multiple download is occurring and that the files should be stored in separate cache files. In practice a more realistic threshold would be when the number of segments created reaches a minimum number, such as 10 or 20. The detection of multiple download may occur when saving the segments to the pre-storage buffer 103, when transferring the buffered segments to the cache 104 or while rearranging the segments in the pre-storage buffer 103. The detection of concurrent multiple downloads of the same media content may use data from other applications, for example from an application that requests the download. It can also be helpful to store a history of downloaded data stream portions so that more data can be analyzed to determine a concurrent download of the same media content than can be stored in the pres-storage buffer 103. While separating independent streams from multiple copies of the same media data can provide savings in terms of the number of segments stored and hence the number of storage operations required to retrieve these segments, such file splitting should be avoided for small segments, as this is inefficient. Furthermore, the number of interruptions that occur and hence the number of segments created can be minimised by providing a sufficiently large pre-storage buffer 103. More specifically, the larger the buffer 103, the fewer segments that will be stored, because the rearrangement allows more of the data portions to be combined into single segments. A preferred size for the pre-storage buffer depends on the device concerned, but preferably lies between 256 KB and 2 MB.

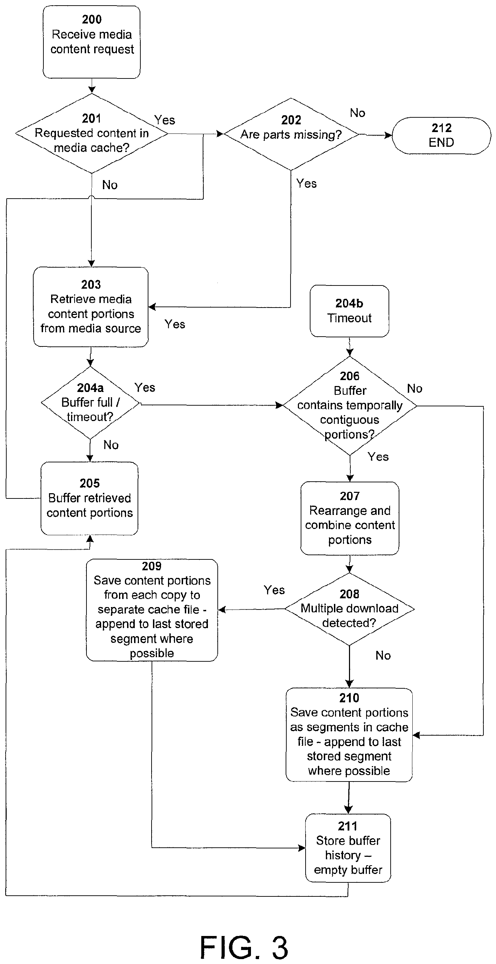

An exemplary method according to a further embodiment is illustrated in Fig. 3. This method starts at step 200 with the receipt of a media content request. This request may come from a web browser, for example, and be triggered by the user opening a tab associated with the viewing of a video. At step 201, the media cache system checks whether the requested media content is already present in the cache. If the requested content is stored in the cache, in one or more segments, the method proceeds to step 202 where it is ascertained whether any of the requested content is missing from the cache. In this regard, it is noted that the cache has a limited storage capacity, in which case a whole media file may not be stored if this is long and playback lags behind data retrieval. However, such an eventuality goes beyond the illustrated method and missing data would not be signalled when the cache is full provided that the cache contained a continuous section of the media file up to the limits of its capacity. In general, media data is considered missing when the cache contains only a small continuous or discontinuous section of requested media content and has capacity for more. For example, media data may be missing when a user initially watches a short sequence from the beginning of a video, then skips for a short time to a later sequence after before returning again to the beginning. Assuming that the viewed sequences are present in a cache file, the last step, which in essence is a second request for the media file starting from the beginning, would elicit the response at step 201 of cached data for the first and second viewed sequences. The response to query at step 202 would be missing data between the first and second viewed sequences and from the second viewed sequence to the end of the video file, or to the capacity of the cache file, whichever is shortest. If all requested media data is present in cache 104, the method terminates at step 212. If none of the requested media data is cached, or some parts are missing, the method proceeds to step 203 where the missing media data is retrieved (i.e. requested and received) from the external media source.

The pre-storage buffer 103 has a capacity for storing a specific quantity of media data. The rearrangement of the buffered media data occurs only once the buffer 103 is full, or alternatively when a specific time has lapsed when no new data is received to minimise the risk of losing received data in the event of a system crash. Thus at step 204a it is determined whether the pre-storage buffer is full. In a separate asynchronous step 204b it is determined whether a timeout has been received, indicating that a predetermined time has elapsed since receipt of media data from the external source. If the buffer still has capacity and assuming that no timeout is received, the method moves to step 205 where pending content portions are buffered in the pre-storage buffer. When buffering received data, any content already stored in cache 104 can be removed by splitting received portions into two or more portions and discarding the already cached portions. Similarly, any data that is received in duplicate, for example, as a result of portions containing overlapping content, can also be discarded. The method then loops back to step 202 and it is again determined whether the requested media content is missing from cache. If the buffer is full as determined at step 204a or a timeout is received as shown at step 204b, the method moves to step 206 where it is determined whether the buffered media data portions are in any way temporally contiguous, i.e. whether the buffered data includes uninterrupted sequential sections of the media data file. This may include portions which contain overlapping data. The media data portions are then rearranged in step 207 into the correct sequential order of the media data file and any portions containing contiguous media data are combined into single segments. The method then continues at step 208 where it is determined whether a concurrent download of multiple copies of the same media content has occurred. As mentioned above, concurrent download of multiple copies of media content can be detected by analysing historical data on downloaded media content or by detecting the creation of a minimum number of segments in the pre-storage buffer. If the answer at step 208 is yes, the method proceeds to step 209 and the rearranged segments are saved to two or more separate cache files with the last stored segment in each cache file being appended by the addition of sequential media data, if possible. If no multiple download is detected the method moves to step 210 and the rearranged media content segments are stored to a single cache file. As for step 209, if a rearranged pre-stored portion contains sequential data to that contained in a last stored segment, this portion is appended to the existing segment stored in cache. The method then moves on to step 211 where the history of the downloaded media content portions is updated with information on the rearranged portions contained in buffer. The buffer may also be emptied at this stage, which in practice may mean that the buffer can be overwritten with new media content data portions. The method then loops back to step 205 and any pending media content data is buffered in pre-storage buffer 103.

It will be understood that the above method does not deal with situations in which the buffer 103 is too small to store the new content coming from the network. In such a case, network or pending buffers would be used to store the data before it is pre-stored in buffer 103.

In addition to storing the media data in segments in a file of the cache 104, the media cache system 10 also stores the metadata relating to each stored segment. The metadata is then used to retrieve the correct segment in a seek operation to enable playback of the media file segments in the correct sequential order.

Metadata is preferably stored as a header to each media data stream segment in the cache file. This is illustrated schematically in Fig. 4 which shows a cache file 1041 made up of several segments 1042. Each of these segments has a header part 1142 and a payload portion 1141, which contains the streamed media data. In an alternative embodiment, the metadata may be stored in a separate file in cache 104 or in an alternative logical location in the memory 102 associated with the media cache system 10. The pre-storage buffer 103 also stores the metadata associated with each segment or portion of streamed media data. For each segment, the metadata includes the starting position in the media content file. For example, a segment at the beginning of a video file would typically include a starting position indicating 0 KB while metadata for a segment containing data from further on in the video may include a starting position indicating 10014 KB. The metadata stored in each segment header 1142 in a cache file 1041 also includes the length of the segment. However, this part of the metadata is only written when a segment is stored in the cache 104; it is not part of the metadata relating to segments or portions stored in the pre-storage buffer 103. In other words when a segment or portion is created in the pre-storage buffer 103 metadata relating to the starting position of the media data within the whole media data item is stored with the segment. However, data on the segment length, i.e. the length of the media data 1141 contained in the segment, is written only when the segment is stored in the cache 104. Similarly, when a segment in the cache 104 is updated by adding sequential media data to it from the pre-storage buffer, the metadata relating to the segment length is updated. This means that should the system crash, the sequential position of the segments is retained, while the metadata relating to the length of media data can be computed.

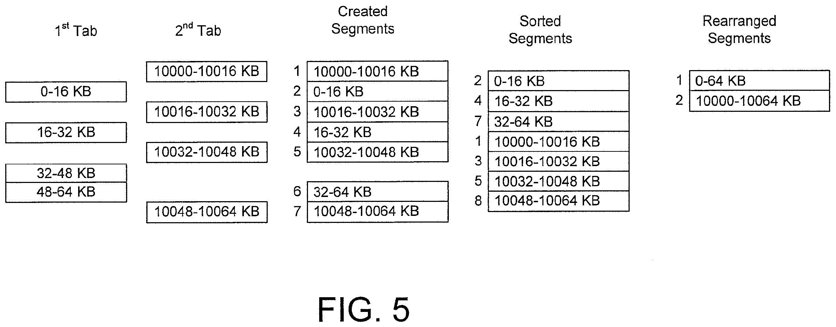

Fig. 5 illustrates how, according to a preferred embodiment, the media cache system would handle the concurrent download of two instances of the same media file as shown in Fig. 1. In this figure, the middle column represents the media data portions or segments buffered in pre-storage buffer 103. Using the metadata attached to each segment, this data can be sorted according to the starting position or address in the media item stream. Since the length of each segment is also known, the end position or address of the media item data is also known, which allows the determination of temporally contiguous data in different sequences. This is clearly the case for segments 2, 4 and 7 (in that order) and 1, 3, 5 and 8. The segments can thus be rearranged and combined to form two large segments of sequential data which can be stored in the cache, possibly in two separate files. By reducing the number of segments stored in the cache 104 the number of seek operations required to retrieve cached segments and to load the metadata during playback is considerably reduced, which improves the overall performance and thus reduces power consumption, while also limiting delays to the user.

Although the description above uses language specific to features and/or methods, it is to be understood that the systems and methods defined in the appended claims are not limited to the specific features or methods described. Rather, the specific features and methods are disclosed as example implementations of streamed media caching and a media cache system.

## Claims

1. A method of storing streamed multimedia data of a multimedia item in a multimedia cache, the method comprising:
receiving said streamed multimedia data as a plurality of multimedia data portions that are discontinuous as the result of at least one of
- user input requesting a skip forward or backward in the stream of multimedia data, and
- user input requesting multiple concurrent streams of multimedia data from the same data item;
pre-storing said plurality of discontinuous multimedia data portions in a buffer In the order In which said portions are received;
determining the temporal position of said pre-stored multimedia data portions in the multimedia data item;
rearranging said pre-stored multimedia data portions in accordance with the determined temporal positions;
combining portions containing uninterrupted consecutive sequences in the media data stream to form at least one temporally contiguous data portion; and
storing each contiguous data portion as a single segment in a cache file.

2. A method as claimed in claim 1, further comprising:
for each segment, storing data identifying the starting position within the whole multimedia data item, of the media data contained in said segment.

3. A method as claimed in claim 2, further comprising:
for each segment, storing data identifying the length of media data contained in said segment.

4. A method as claimed in any previous claim, further comprising:
ascertaining when at least one pre-stored multimedia data portion is temporally consecutive to multimedia data contained in an already stored segment in said cache file,
updating said already stored segment by appending to it said at least one temporally consecutive pre-stored multimedia data portion.

5. A method as claimed in claim 4, wherein said step of updating said already stored segment includes updating stored data identifying the length of media data contained in said segment.

6. A method as claimed in any previous claim, further comprising:
detecting a concurrent download of multiple instances of said multimedia data item.
identifying temporally contiguous multimedia data portions containing an original of said multimedia data stream and contiguous multimedia data portions containing copies of said multimedia data stream,
storing each temporally contiguous multimedia data portion containing an original of said multimedia data stream as a segment in said cache file and storing each temporally contiguous multimedia data portion containing a copy of said multimedia data stream as a segment in a separate cache file.

7. A method as claimed in claim 6, further comprising:
detecting said concurrent download of multiple instances of said multimedia data item by ascertaining that the number of pre-stored multimedia data portions in said buffer prior to rearranging, exceeds a predetermined number.

8. A method as claimed In any one of the previous claims wherein said step of determining the temporal position of said pre-stored multimedia data portions in the multimedia data item is performed after elapse of a predetermined time following receipt of a portion of a multimedia data item.

9. A method as claimed in any one of claims 1 to 8, wherein said step of determining the temporal position of said pre-stored multimedia data portions in the multimedia data item is performed when said pre-storage buffer is full.

10. A computer readable medium having computer instructions stored thereon that when executed perform the method of any one of claims 1 to 9.

11. A media cache system for optimising storage of streamed multimedia data of a multimedia item comprising;
a processor (101) configured to control receipt of said streamed multimedia data that is being received as a plurality of multimedia data portions that are discontinuous as the result of at least one of
- user input requesting a skip forward or backward in the stream of multimedia data, and
- user input requesting multiple concurrent streams of multimedia data from the same data item;
a buffer (103) configured to pre-store said plurality of discontinuous multimedia data portions in the order in which said portions are received under control of said processor (101);
said processor being further configured to determine the temporal position of said pre-stored multimedia data portions, and to
rearrange said pre-stored multimedia data portions in accordance with the determined temporal positions, and combine portions containing uninterrupted consecutive sequences in the media data stream to form at least one temporally contiguous data portion; and
a cache (104) configured to store each contiguous data portion as a single segment In a cache file under control of said processor (101).

12. A media cache system as claimed in claim 11, wherein said processor is further configured to
ascertain when at least one pre-stored multimedia data portion is temporally consecutive to multimedia data contained in an already stored segment in said cache file, and
to update said already stored segment by appending to it said at least one pre-stored multimedia data portion.

13. A media cache system as claimed In claim 11 or 12, wherein said processor is further configured to:
detect a concurrent download of multiple instances of said multimedia data item, to identify temporally contiguous multimedia data portions stored in said pre-storage buffer (103) that contain an original of said multimedia data stream and contiguous multimedia data portions containing copies of said multimedia data stream.
storing each temporally contiguous multimedia data portion containing an original of said multimedia data stream as a segment in said cache file and storing each temporally contiguous multimedia data portion containing a copy of said multimedia data stream as a segment in a separate cache file in said cache (104).

14. A media cache system as claimed in any one of claims 11 to 13 wherein said processor (101) is further configured to determine the temporal position of said pre-stored multimedia data portions stored in said buffer (103) only after elapse of a predetermined time following pre-storage of a last portion of a multimedia data item in said buffer (103).

15. A media cache system as claimed in any one of claims 11 to 13, wherein said processor is configured to determine the temporal position of said pre-stored multimedia data portions stored in said buffer (103) only when said buffer (103) Is full.

16. A user device comprising a media cache system as claimed in any one of claims 11 to 16.

## Patentansprüche

1. Verfahren zum Speichern von gestreamten Multimediadaten eines Multimediaelements in einem Multimediacache, welches Verfahren Folgendes umfasst:
Empfangen der gestreamten Multimediadaten als eine Mehrheit von Multimediadatenteile, die diskontinuierlich sind als Ergebnis von mindestens einer von
- Benutzereingabe, anfordernd vorwärts springen oder rückwärts springen im Multimediadatenstrom, und
- Benutzereingabe, anfordernd mehrere gleichzeitige Multimediadatenströme vom selben Datenelement;
Vorspeichern der Mehrheit von diskontinuierlichen Multimediadatenteilen in einem Puffer in der Reihenfolge, in der die Teile empfangen werden;
Bestimmen der zeitlichen Position der vorgespeicherten Multimediadatenteile im Multimediadatenelement;
Umordnen der vorgespeicherten Multimediadatenteile in Übereinstimmung mit den bestimmten zeitlichen Positionen;
Kombinieren von Teilen, die ununterbrochene aufeinanderfolgende Sequenzen im Mediadatenstrom enthalten, um mindestens einen zeitlich angrenzenden Datenteil zu bilden; und
Speichern von jedem angrenzenden Datenteil als ein einziges Segment in einer Cachedatei.

2. Verfahren nach Anspruch 1, weiter umfassend:
für jedes Segment, Speichern von Daten, die die Starposition im gesamten Multimediadatenelement der im Segment enthaltenen Mediadaten identifizieren.

3. Verfahren nach Anspruch 2, weiter umfassend:
für jedes Segment, Speichern von Daten, die die Länge der im Segment enthaltenen Mediadaten identifizieren.

4. Verfahren nach einem der vorgehenden Ansprüche, weiter umfassend:
Feststellen wann mindestens ein vorgespeicherter Multimediadatenteil Multimediadaten, die in einem schon gespeicherten Segment in der Cachedatei enthalten sind, zeitlich folgt,
Aktualisieren des schon gespeicherten Segments durch Hinzufügung dazu des mindestens einen zeitlich folgenden vorgespeicherten Multimediadatenteil.

5. Verfahren nach Anspruch 4, wobei der Schritt zur Aktualisierung des schon gespeicherten Segments Aktualisieren von gespeicherten Daten umfasst, die die Länge der im Segment enthaltenen Mediadaten identifizieren.

6. Verfahren nach einem der vorgehenden Ansprüche, weiter umfassend:
Nachweisen eines gleichzeitigen Downloads von mehreren Fällen des Multimediadatenelements,
Identifizieren von zeitlich angrenzenden Multimediadatenteilen, die ein Original des Multimediadatenstroms enthalten, und angrenzenden Multimediadatenteilen, die Kopien des Multimediadatenstroms enthalten,
Speichern von jedem zeitlich angrenzenden Multimediadatenteil, der ein Original des Multimediadatenstroms enthält, als ein Segment in der Cachedatei, und Speichern von jedem zeitlich angrenzenden Multimediadatenteil, der eine Kopie des Multimediadatenstroms enthält, als ein Segment in einer getrennten Cachedatei.

7. Verfahren nach Anspruch 6, weiter umfassend:
Nachweisen des gleichzeitigen Downloads von mehreren Fällen des Multimediadatenelements durch Feststellung, dass die Anzahl von vorgespeicherten Multimediadatenteilen im Puffer vor dem Umordnen einer vorgegebenen Anzahl übersteigt.

8. Verfahren nach einem der vorgehenden Ansprüche, wobei der Schritt zur Bestimmung der zeitlichen Position der vorgespeicherten Multimediadatenteile im Multimediadatenelement nach Ablauf eines vorgegebenen Zeitraums nach Empfang eines Teils eines Multimediadatenelements durchgeführt wird.

9. Verfahren nach einem der Ansprüche 1 bis 8, wobei der Schritt zur Bestimmung der zeitlichen Position der vorgespeicherten Multimediadatenteile im Multimediadatenelement durchgeführt wird, wenn der Vorspeicherpuffer voll ist.

10. Computerlesbares Medium mit darauf gespeicherten Computeranweisungen, die beim Durchführen das Verfahren nach einem der Ansprüche 1 bis 9 ausführen.

11. Mediacachesystem zur Optimierung der Speicherung von gestreamten Multimediadaten eines Multimediaelements umfassend:
einen Prozessor (101), der dafür ausgelegt ist, Empfang der gestreamten Multimediadaten zu steuern, die als eine Mehrheit von Multimediadatenteilen empfangen werden, die diskontinuierlich sind als Ergebnis von mindestens einer von
- Benutzereingabe, anfordernd vorwärts springen oder rückwärts springen im Multimediadatenstrom, und
- Benutzereingabe, anfordernd mehrere gleichzeitige Multimediadatenströme vom selben Datenelement;
einen Puffer (103), der dafür ausgelegt ist, die Mehrheit von diskontinuierlichen Multimediadatenteilen in der Reihenfolge, in der die Teile empfangen werden, unter der Kontrolle des Prozessors (101) vorzuspeichern;
wobei der Prozessor weiter dafür ausgelegt ist, die zeitliche Position der vorgespeicherten Multimediadatenteile zu bestimmen, und
die vorgespeicherten Multimediadatenteile in Übereinstimmung mit den bestimmten zeitlichen Positionen umzuordnen, und Teile mit ununterbrochenen aufeinanderfolgenden Sequenzen im Mediadatenstrom zu kombinieren, um mindestens einen zeitlich angrenzenden Datenteil zu bilden; und
einen Cache (104), der dafür ausgelegt ist, jeden angrenzenden Datenteil als ein einziges Segment in einer Cachedatei unter der Kontrolle des Prozessors (101) zu speichern.

12. Mediacachesystem nach Anspruch 11, worin der Prozessor weiter dafür ausgelegt ist,
Feststellen wann mindestens ein vorgespeicherter Multimediadatenteil Multimediadaten, die in einem schon gespeicherten Segment in der Cachedatei enthalten sind, zeitlich folgt,
Aktualisieren des schon gespeicherten Segments durch Hinzufügung dazu des mindestens einen vorgespeicherten Multimediadatenteil.

13. Mediacachesystem nach Anspruch 11 oder 12, worin der Prozessor weiter dafür ausgelegt ist:
Nachweisen eines gleichzeitigen Downloads von mehreren Fällen des Multimediadatenelements,
Identifizieren von zeitlich angrenzenden Multimediadatenteilen, die im Vorspeicherpuffer (103) gespeichert sind und ein Original des Multimediadatenstroms enthalten, und angrenzenden Multimediadatenteilen, die Kopien des Multimediadatenstroms enthalten,
Speichern von jedem zeitlich angrenzenden Multimediadatenteil, der ein Original des Multimediadatenstroms enthält, als ein Segment in der Cachedatei, und Speichern von jedem zeitlich angrenzenden Multimediadatenteil, der eine Kopie des Multimediadatenstroms enthält, als ein Segment in einer getrennten Cachedatei im Cache (104).

14. Mediacachesystem nach einem der Ansprüche 11 bis 13, worin der Prozessor (101) weiter dafür ausgelegt ist, die zeitliche Position der vorgespeicherten Multimediadatenteile im Puffer (103) nur nach Ablauf eines vorgegebenen Zeitraums nach Vorspeicherung eines letzten Teils eines Multimediadatenelements im Puffer (103) zu bestimmen.

15. Mediacachesystem nach einem der Ansprüche 11 bis 13, worin der Prozessor dafür ausgelegt ist, die zeitliche Position der vorgespeicherten Multimediadatenteile, die im Puffer (103) gespeichert sind, nur dann zu bestimmen, wenn der Puffer (103) voll ist.

16. Benutzervorrichtung umfassend ein Mediacachesystem nach einem der Ansprüche 11 bis 15.

## Revendications

1. Procédé de stockage de données multimédia en continu d'un élément multimédia dans un cache multimédia, le procédé comprenant:
la réception des données multimédia en continue en tant que pluralité de parties de données multimédia qui sont discontinues comme le résultat d'au moins l'une
- d'une entrée par l'utilisateur demandant un saut en avant ou un saut en arrière dans le flux de données multimédia, et
- d'une entrée par l'utilisateur demandant de multiples flux simultanés de données multimédia à partir du même élément de données;
le pré-stockage de ladite pluralité desdites parties de données multimédia discontinues dans un tampon dans l'ordre dans lequel lesdites parties sont reçues;
la détermination de la position temporelle desdites parties de données multimédia préalablement stockées dans l'élément de données multimédia;
le réarrangement desdites parties de données multimédia pré-stockées conformément aux positions temporelles déterminées;
la combinaison de parties contenant des séquences consécutives ininterrompues dans le flux de données média pour former au moins une partie de données temporairement contiguë; et
le stockage de chaque partie de données contiguë en tant que segment unique dans un fichier cache.

2. Procédé selon la revendication 1, comprenant en outre:
pour chaque segment, le stockage de données identifiant la position de départ de l'entier élément de données multimédia des données média contenues dans ledit segment.

3. Procédé selon la revendication 2, comprenant en outre:
pour chaque segment, le stockage de données identifiant la longueur de données média contenues dans ledit segment.

4. Procédé selon l'une quelconque des revendications précédentes, comprenant en outre:
la vérification lorsqu'au moins une partie de données multimédia pré-stockées est temporairement consécutive à des données multimédia contenues dans un segment déjà stocké dans ledit fichier cache,
la mise à jour dudit segment déjà stocké en lui ajoutant ladite au moins une partie de données multimédia pré-stockées et temporairement consécutives.

5. Procédé selon la revendication 4, dans lequel ladite étape de la mise à jour dudit segment pré-stocké comprend la mise à jour de données stockées identifiant la longueur de données de média contenues dans ledit segment.

6. Procédé selon l'une quelconque des revendications précédentes, comprenant en outre:
la détection d'un téléchargement simultané de plusieurs instances dudit élément de données multimédia,
l'identification de parties de données multimédia temporairement contiguës contenant un original dudit flux de données multimédia et de parties de données multimédia contiguës contenant des copies dudit flux de données multimédia,
le stockage de chaque partie de données multimédia temporairement contiguës contenant un original dudit flux de données multimédia en tant que segment dans ledit fichier cache et le stockage de chaque partie de données multimédia temporairement contiguës contenant une copie dudit flux de données multimédia en tant que segment dans un fichier cache séparé.

7. Procédé selon la revendication 6, comprenant en outre:
la détection dudit téléchargement simultané de plusieurs instances dudit élément de données multimédia en vérifiant que le nombre de parties de données multimédia pré-stockées dans ledit tampon avant le réarrangement dépasse un nombre prédéterminé.

8. Procédé selon l'une quelconques des revendications précédentes, dans lequel ladite étape de la détermination de la position temporelle desdites parties de données multimédia pré-stockées dans l'élément de données multimédia est effectuée après un délai prédéterminé après la réception d'une partie d'un élément de données multimédia.

9. Procédé selon l'une quelconques des revendications 1 à 8, dans lequel ladite étape de la détermination de la position temporelle desdites parties de données multimédia pré-stockées dans l'élément de données multimédia est effectuée lorsque ledit tampon de pré-stockage est plein.

10. Support lisible par ordinateur ayant des instructions informatiques stockées sur celui-ci, qui, lorsqu'elles sont exécutées, exécutent le procédé selon l'une quelconque des revendications 1 à 9.

11. Système de cache de média pour optimiser le stockage de données multimédia en continu d'un élément multimédia, comprenant:
un processeur (101) configuré pour contrôler la réception des données multimédia en continue qui sont reçues en tant que pluralité de parties de données multimédia qui sont discontinues comme le résultat d'au moins l'une
- d'une entrée par l'utilisateur demandant un saut en avant ou saut en arrière dans le flux de données multimédia, et
- d'une entrée par l'utilisateur demandant de multiples flux simultanés de données multimédia à partir du même élément de données;
un tampon (103) configuré pour le pré-stockage d'une pluralité desdites parties de données multimédia discontinues dans l'ordre dans lequel lesdites parties sont reçues sous le contrôle dudit processeur (101);
ledit processeur étant en outre configuré pour la détermination de la position temporelle desdites parties de données multimédia pré-stockées, et pour le réarrangement desdites parties de données multimédia pré-stockées conformément aux positions temporelles déterminées, et la combinaison de parties contenant des séquences consécutives ininterrompues dans le flux de données média pour former au moins une partie de données temporairement contiguë; et
un cache (104) configuré pour stocker chaque partie de données contiguë en tant que segment unique dans un fichier cache sous le contrôle dudit processeur (101).

12. Système de cache de média selon la revendication 11, dans lequel ledit processeur est en outre configuré pour
la vérification lorsqu'au moins une partie de données multimédia pré-stockées est temporairement consécutive à des données multimédia contenues dans un segment déjà stocké dans ledit fichier cache, et
la mise à jour dudit segment déjà stocké en lui ajoutant ladite au moins une partie de données multimédia pré-stockées.

13. Système de cache de média selon la revendication 11 ou 12, dans lequel ledit processeur est en outre configuré pour
la détection d'un téléchargement simultané de plusieurs instances dudit élément de données multimédia,
l'identification de parties de données multimédia temporairement contiguës stockées dans ledit tampon de pré-stockage (103) contenant un original dudit flux de données multimédia et des parties de données multimédia contiguës contenant des copies dudit flux de données multimédia,
le stockage de chaque partie de données multimédia temporairement contiguës contenant un original dudit flux de données multimédia en tant que segment dans ledit fichier cache et le stockage de chaque partie de données multimédia temporairement contiguës contenant une copie dudit flux de données multimédia en tant que segment dans un fichier cache séparé (104).

14. Système de cache de média selon l'une quelconque des revendications 11 à 13, dans lequel ledit processeur (101) est en outre configuré pour déterminer la position temporelle desdites parties de données multimédia pré-stockées stockées dans ledit tampon (103) uniquement après un délai prédéterminé après pré-stockage d'une dernière partie d'un élément de données multimédia dans ledit tampon (103).

15. Système de cache de média selon l'une quelconque des revendications 11 à 13, dans lequel ledit processeur est en outre configuré pour déterminer la position temporelle desdites parties de données multimédia pré-stockées stockées dans ledit tampon (103) uniquement lorsque ledit tampon (103) est plein.

16. Dispositif utilisateur comprenant un système de cache de média selon l'une quelconque des revendications 11 à 15.
